(19) Europäisches Patentamt
European Patent Office
Office européen des brevets

(11) **EP 2 816 834 A1**

(12) **EUROPEAN PATENT APPLICATION**

(43) Date of publication:
**24.12.2014 Bulletin 2014/52**

(51) Int Cl.:
**H04W 16/16** (2009.01)    **H04W 72/08** (2009.01)

(21) Application number: **13305842.0**

(22) Date of filing: **21.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
 • **Kucera, Stephen**
  **DUBLIN, 15 (IE)**

 • **Lopez-Perez, David**
  **DUBLIN, 15 (IE)**

(74) Representative: **Coghlan, Judith Elizabeth Kensy et al**
  **Script IP Limited**
  **Turnpike House**
  **18 Bridge Street**
  **Frome BA11 1BB (GB)**

Remarks:
Amended claims in accordance with Rule 137(2) EPC.

(54) **Wireless telecommunications network node and method for interference reduction**

(57)    A wireless telecommunications network node method, a network node and a computer program product operable to perform the network node method. The method comprising: defining a set of neigh bouring co-channel cells comprising a plurality of cells; identifying a master cell of the set of neighbouring co-channel cells; allocating resource to user equipment being supported by any other one of the set of neighbouring co-channel cells to locate messages for the user equipment within available resource at locations which reduce interference to user equipment being supported by the master cell. Aspects and embodiments may operate to adaptively create on-demand interference-free "passage corridors" across data channels for mobile macro cell user equipment that are roaming throughout an area of a network where there are, for example, multiple small cells. Moreover, aspects and embodiments may prevent collision of control messages of cell-edge users. Aspects and embodiments offer a simple and distributive implementation, and can avoid a need for direct inter-cell communication.

MC-MC orthogonality of dedicated resources

macro cell 1
MC-ID → F → dedicated MC resources
MC-ID broadcast
MC-ID → F' → dedicated SC resources
small cell 1
small cell 2
small cell N
SC-SC identity of dedicated resources within same MC ("resource corridor")

macro cell 2
MC-ID → F → dedicated MC resources
MC-ID broadcast
MC-ID → F' → dedicated SC resources
small cell 1
small cell 2
small cell N
SC-SC identity of dedicated resources within same MC ("resource corridor")

Basic invention idea
FIG. 3

## Description

FIELD OF THE INVENTION

The present invention relates to a wireless telecommunications network node, a method and a computer program product.

BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

SUMMARY

A first aspect provides a wireless telecommunications network node method, comprising: defining a set of neighbouring co-channel cells comprising a plurality of cells; identifying a master cell of the set of neighbouring co-channel cells; allocating resource to user equipment being supported by any other one of the set of neighbouring co-channel cells to locate messages for the user equipment within available resource at locations which reduce interference to user equipment being supported by the master cell.

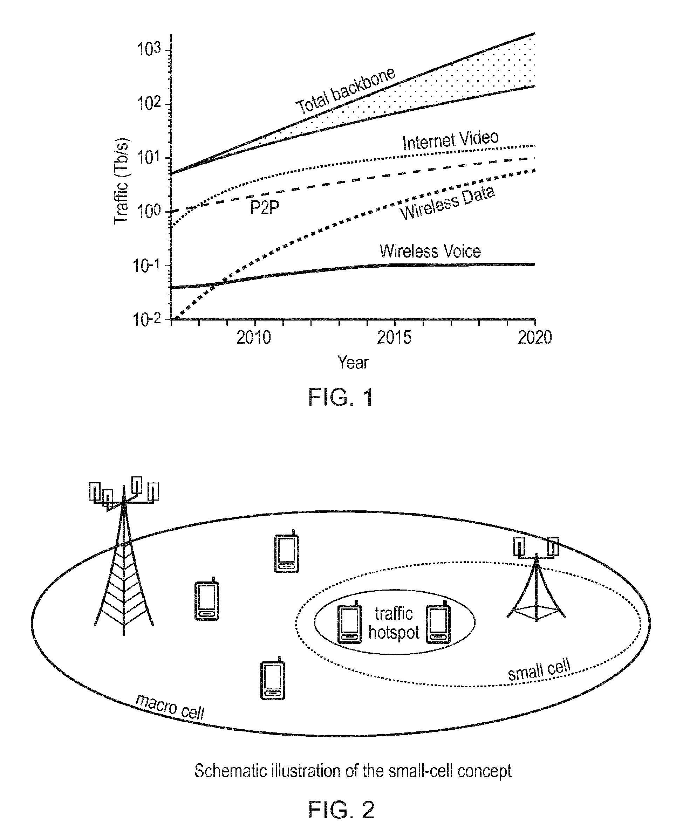

The first aspect recognises that the increasing demand for wireless multimedia services is driving a strong growth in wireless data traffic. As shown in Figure 1, the capacity of current networks need to be augmented by one or two orders of magnitude to cope with the trend. Moreover, as the world-wide sales of increasingly capable tablets are expected to reach 500 million in 2015, service providers expect subscribers to demand not only higher data rates, but also better user experience and quality of service.

Contrary to the nearly-saturated (performance-wise) physical layer, deployment of small cells can theoretically increase the achievable data rates by multiple orders of magnitude without requiring additional wireless resources. However, it is very expensive to provide full area coverage using only small cells, particularly in areas with low user demand. Therefore, network providers are increasingly interested in hierarchical cell structures where macro cells for area coverage are complemented with small cells to provide high capacity where needed as illustrated in Figure 2.

The deployment of macro cells is typically optimized by means of network planning to provide a near-continuous coverage of the geographic area of the network. On the other hand, small cells are deployed in an ad hoc manner to cover traffic hot-spots or macro-cell coverage holes. Typically, small cells are deployed within macro cells or in their vicinity.

Since the frequency spectrum available for cellular networks is limited and expensive, operators are keen on re-using macro-cell spectrum for small cells. Such co-channel deployments can achieve higher spectral efficiencies compared to separate channel deployments, but suffer from increased co-channel interference.

In general, macro-cell users moving fast through the coverage of multiple small cells are likely to experience a transmission outage as the inter-cell interference in the control plane results into non-negligible rates of handover failures and radio link failures. The interference also negatively affects the decoding of the data plane because the control plane conveys the information on downlink/ uplink scheduling grants and power control commands.

The control plane is, in simple terms, understood throughout to be the user-specific control information such downlink/uplink scheduling grants and power control commands (essentially, the information on the Physical Downlink Control CHannel PDCCH). Cell-specific channels responsible for conveying information on primary/ secondary synchronization (PSS/ SSS), broadcast control (PBCH), control reference (CRS) etc. are ignored, even though the notion of cell identifiers, related to cell-specific control channels, will be mentioned.

The first aspect recognises that inter-cell interference can cause the failure of both the control and data planes. Control-plane failures introduce non-negligible handover unreliability, and, as described above, can negatively affect the decoding of the data plane. In relation to data plane failures, apart from extending data delivery delay, the failure can significantly degrade the response time of the TCP/IP layer owing to an adaptive (typically exponential) reduction in the TCP receive window.

Implementation of a positive cell-selection bias in relation to small cells can help mobile users to perform handovers more reliably, but post-handover transmissions on the data plane may then then affected by stronger interference from a macro cell if eICIC (enhanced inter-cell interference coordination) techniques are not used, for example, blanking of macro-cell resources.

Aspects and embodiments aim is to mitigate co-channel interference in both data and control channels by means of distributed coordination of control/ data resource allocation to ensure a complete and seamless co-existence of a macro-cell tier and a small-cell tier in a heterogeneous network. Aspects and embodiments aim to mitigate issues relating to the problem of interference-free resource allocation without inherently relying on the support of standard eICIC techniques.

Current two-tier networks, i.e. networks containing both macro-cell and small-cell tiers, solve the issue of mobility and inter-tier interference management by dedicating non-overlapping frequency bands to each tier. This is a common scenario for current deployments in 3G CDMA networks, but it is applicable also to 4G OFDMA systems by using the concept of carrier aggregation. A similar approach consists of letting high power cells (for example, macro cells) unilaterally vacate part of their resources (so-called almost blank subframes) to reduce interference to those users most impacted by interference by said high power cell (for example, small-cell users).

However, the first aspect recognises that each of these approaches have shortcomings. In particular, although technically simple and viable, the above approaches significantly reduce the network capacity and spectral efficiency, while also contributing to added complexity/ overhead. For these reasons, co-channel and/or non-blanking solutions are more preferable.

A more dynamic approach can be taken in LTE where inter-cell communication between the macro cells and the small cells over an X2 interface can be used to flexibly coordinate an allocation of non-overlapping resource blocks by both tiers.

A general drawback of X2-based solutions is that the exact implementation of the feedback protocols is typically vendor specific. In other words, the X2 interface is only partially standardized. This raises incompatibility issues in multi-vendor networks. Even in single-vendor networks, the relatively large delay in inter-cell message exchange as well as combinatorial complexity of inter-cell scheduling coordination degrades the applicability and effectiveness of feedback-centric solutions.

The first aspect recognises that within a group of base stations supporting cells it is possible to implement methods which allow cooperation between cells, by nomination of a master cell and adjustment of non-master cells in dependence upon actions and allocations made by the master cell. In particular, the first aspect recognises that if the operation of a master cell is known, then the operation of other cells in a group may be adjusted accordingly. Aspects and embodiments described may use general knowledge of locally orthogonal macro-cell identities in a cellular network to distributively, and without any direct inter-cell communication, allocate control and/ or data-plane resource such that: all non-master cells within a given group of cells eschew transmission in, for example, a selected few identical resources. Such an arrangement may operate to create interference-free resource "corridors" within the group of cells that enable mobile users (UE) a seamless passage through the group of cells, whilst those users are served by the master cell, despite passing through regions which might otherwise be served by non-master cells.

According to one embodiment, resource for use by user equipment supported by the master cell comprises a function of master cell identity. Accordingly, a master cell may determine a part of the available control and/or data-plane resource as an output of a known function by using its own master-cell identity as a functional input and primarily uses those determined resources for its control and data transmissions. Each non master cell deployed within the group may be operable to use knowledge of the function and knowledge of the master cell identity to determine a complementary/ arbitrary part of its control/ data-plane resources which can then primarily used for non-master-cell control/ data transmissions. In some embodiments, the non-master cells lie within a region of radio coverage provided by the master cell. In some embodiments, the identity of the master cell is broadcast by the master cell.

According to one embodiment, resource for use by user equipment supported by the master cell comprises a function of user equipment identity. Accordingly, the location of resource to be used by a cell may be determined by a cell specific user identity allocated to a user. In some embodiments, a master cell may be associated with one or more master cell user identifiers, such that the location of master cell data and control resource and messaging can be inferred by non-master cells and appropriate non-master cell user identities can be allocated to users of non master cells in dependence upon such inference. That is to say, some aspects and embodiments may use fully distributed partitioning of user cell identifiers (so-called RNTIs in LTE) for a given master or non-master cell identity in order to create partitioning of the control-plane resources that prevent inter-cell collisions of control messages.

According to one embodiment, the function is known by the plurality of cells. Accordingly, shared knowledge of a function by which a master cell allocates resource can enable non-master cells to apply a complementary function to locate users in resource which can substantially avoid a location used by said master cell. The function may be selected in accordance with a desired mode of network operation.

According to one embodiment, allocating comprises: inferring, based on the master cell identity, a location of messages in the resource likely to be used by user equipment being supported by the master cell and allocating resource to user equipment being supported by any other one of the set of neighbouring co-channel cells to avoid the inferred location. Accordingly, operation of users associated with the master cell may be minimally disturbed by non-master cells and vice versa.

According to one embodiment, the resource comprises bandwidth. Accordingly, resource may comprise resource blocks. Those resource blocks may be resource blocks in the data plane and/ or in the control plane. In some embodiments, the resource may comprise time, for example sub-frame(s) to be used by the master cell and non-master cells.

According to one embodiment, resource comprises an indication of user equipment identity. Accordingly, since resource in the time or frequency domain may be allocated on the basis of user identity, user identity may be partitioned and allocated on the basis of master and non-master cell identities.

According to one embodiment, allocating comprises: inferring, based on master cell identity and an indication of user equipment identifiers used by user equipment supported by the master cell, a location of messages in the resource likely to be used by the user equipment being supported by the master cell and allocating user equipment identifiers to user equipment being supported by any other one of the set of neighbouring co-channel cells to avoid the inferred location of messages in the resource likely to be used by the user equipment being supported by the master cell.

According to one embodiment, the step of allocating comprises allocating the resource to user equipment to relocate the messages within the available resource to at least partially unoccupy locations utilised by messages for user equipment supported by the master cell. Accordingly, although full avoidance of a region of resource may not be possible, appropriate allocation may operate so that greedy filling algorithms implemented by schedulers at non master cells substantially avoid a region of resource allocated to the master cell. According to one embodiment, step of allocating comprises allocating resource to user equipment to relocate messages within the available resource to fully unoccupy locations utilised by messages for user equipment supported by the master cell.

According to one embodiment, the step of allocating comprises: allocating the resource to user equipment of all of the plurality of cells other than the master cell to relocate the messages within the available resource at locations which reduce interference to user equipment being supported by the master cell. Accordingly, substantially interference-free corridors can be provided to master cell user equipment passing through the group of cells.

According to one embodiment, the step of allocating comprises: allocating master cell resource to the user equipment supported by the master cell to locate the messages within a selected region of the available resource. Accordingly, a master cell may be controlled by a higher network control node, such that operation across a network may be controlled appropriately.

A second aspect provides a computer program product operable, when executed on a computer, to perform the method steps of the first aspect.

A third aspect provides a wireless telecommunications network node, comprising: identification logic operable to define a set of neighbouring co-channel cells comprising a plurality of cells and identify a master cell of the set of neighbouring co-channel cells; and allocation logic operable to allocate resource to user equipment being supported by any other one of the set of neighbouring co-channel cells to locate messages for the user equipment within available resource at locations which reduce interference to user equipment being supported by the master cell.

According to one embodiment, resource for use by user equipment supported by the master cell comprises a function of master cell identity.

According to one embodiment, resource for use by user equipment supported by the master cell comprises a function of user equipment identity.

According to one embodiment, the function is known by the plurality of cells.

According to one embodiment, the allocation logic is operable to infer, based on the master cell identity, a location of messages in the resource likely to be used by user equipment being supported by the master cell and allocate resource to user equipment being supported by any other one of the set of neighbouring co-channel cells to avoid the inferred location.

According to one embodiment, the resource comprises bandwidth.

According to one embodiment, resource comprises an indication of user equipment identity.

According to one embodiment, the allocation logic is operable to infer, based on master cell identity and an indication of user equipment identifiers used by user equipment supported by the master cell, a location of messages in the resource likely to be used by the user equipment being supported by the master cell and allocate user equipment identifiers to user equipment being supported by any other one of the set of neighbouring co-channel cells to avoid the inferred location of messages in the resource likely to be used by the user equipment being supported by the master cell.

According to one embodiment, the allocation logic is operable to allocate the resource to user equipment to relocate the messages within the available resource to at least partially unoccupy locations utilised by messages for user equipment supported by the master cell.

According to one embodiment, the allocation logic is operable to allocate the resource to user equipment to relocate messages within the available resource to fully unoccupy locations utilised by messages for user equipment supported by the master cell.

According to one embodiment, the allocation logic is operable to allocate the resource to user equipment of all of the plurality of cells other than the master cell to relocate the messages within the available resource at locations which reduce interference to user equipment being supported by the master cell.

According to one embodiment, the allocation logic is operable to allocate the master cell resource to the user equipment supported by the master cell to locate the messages within a selected region of the available resource.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates network traffic predictions;
Figure 2 illustrates an example small cell deployment;
Figure 3 illustrates schematically an overview of some aspects and embodiments;
Figure 4 illustrates schematically partitioning of user equipment identifiers;

Figure 5 illustrates schematically partitioning of data plane bandwidth according to one embodiment; and
Figure 6 illustrates schematically example mapping functions according to some embodiments.

DESCRIPTION OF THE EMBODIMENTS

Overview

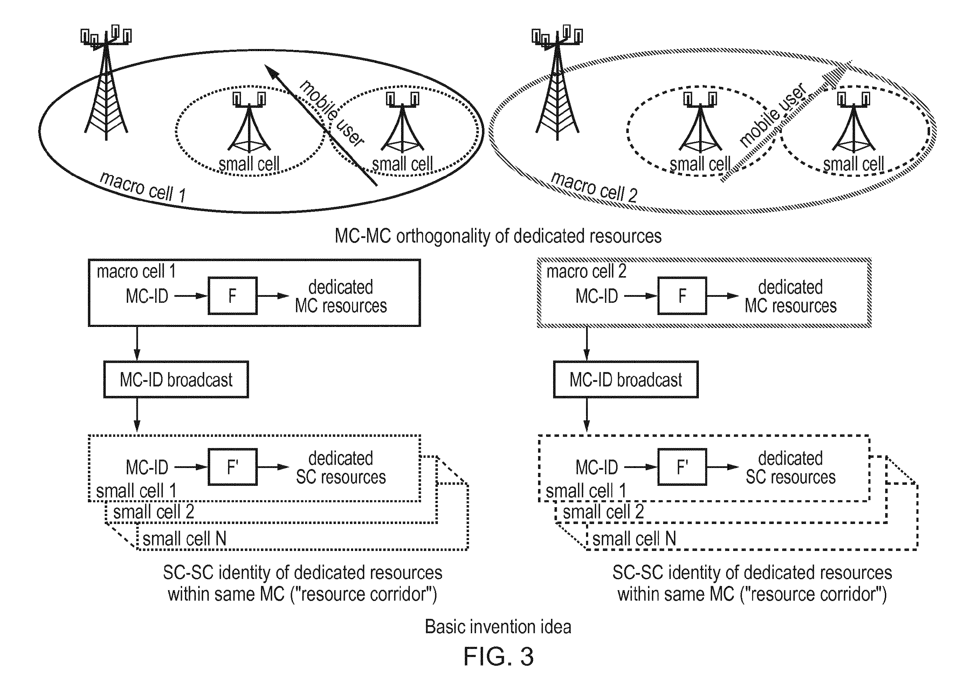

Before discussing the embodiments in any more detail, first an overview will be provided. Figure 3 illustrates schematically an overview of some aspects and embodiments. Focusing primarily on the OFDMA networking standards, aspects and embodiments described address methods to use general knowledge of locally orthogonal macro-cell identities in a cellular network to distributively (i.e., without any inter-cell communication) allocate control/data-plane resources such that: all small cells within a given macro cell eschew transmission in a selected few identical resources (to create interference-free resource "corridors" within the macro cell that enable mobile users (UE) a seamless passage through the small-cell area), and neighbouring macro cells transmit over non-overlapping resources (to further suppresses undesired mutual interference, preferably to cell-edge users).

Aspects and embodiments may further operate to specify allocated resources: qualitatively (in other words, allocated resources correspond to user identifiers at the control plane, and bandwidth sections at the data plane), and quantitatively (in other words, relative location of small-cell resources with respect to the location of the resources of the hosting macro cell, i.e. the overall degree of mutual overlap, depending on the plane nature).

In particular, with respect to the first basic idea, aspects and embodiments propose that a macro cell (MC) determines a part of the available control/ data-plane resources as the output of a known (pre-determined) function **F** by using its own macro-cell identity (MC-ID) as the functional input (i.e. **resource_fragment = F( MC-ID )**), and primarily uses the determined resources for its MC control/ data transmissions. Each small cell (SC) deployed within the coverage of a MC uses a knowledge of **F** and **MC-ID** to determine a complementary/ arbitrary part of its control/ data-plane resources, respectively, which are then primarily used for the SC control/ data transmissions.

As shown by examples, a suitable design of **F** (e.g. via linear congruential generators) can ensure the implementation of the above goals without any inter-cell communication, nor the application of standard eICIC techniques such as blanking of resources. Nevertheless, while aiming to enable higher resource efficiency, it is still possible to combine aspects and embodiments described with standard ICIC/eICIC techniques (e.g., for further resource allocation coordination among multiple interfering small cells).

Furthermore, with respect to the second basic idea, some aspects and embodiments may use fully distributed partitioning of user cell identifiers (so-called RNTIs in LTE) for a given MC/ SC identity in order to create partitioning of the control-plane resources that prevent inter-cell collisions of control messages.

The proposed partitioning of the data-plane resources is also fully distributed, and relies on interference measurements and the greedy nature of the base station schedulers.

Examples concerning the 4G LTE standards for OFDMA communications are described. A macro-cell (MC) network is considered in which multiple small cells (SC) are deployed within the coverage range of macro cells. The SCs share the same OFDM resources as the hosting MC (co-channel deployment).

The examples described assume that the traffic of at least one network cell (M/ SC) is not <u>entirely</u> saturated.

**Interference mitigation in control channel (PDCCH)**

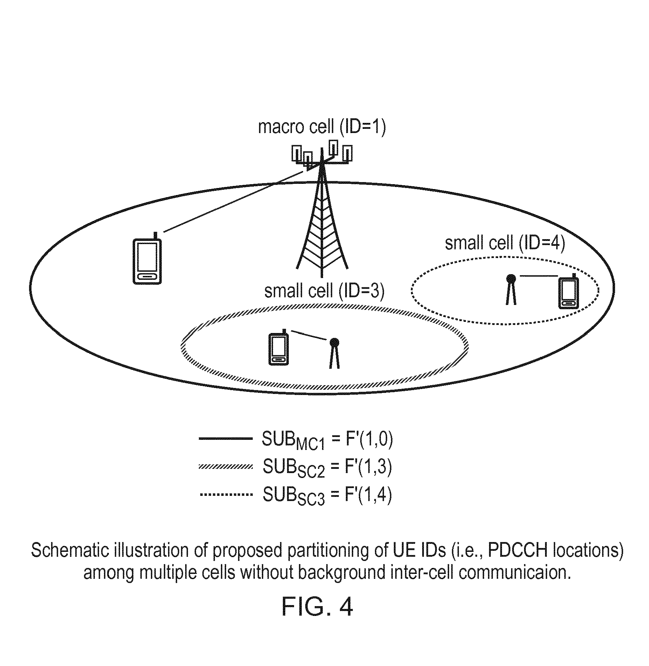

Figure 4 illustrates schematically partitioning of user equipment identifiers.

In LTE, control messages are delivered by so-called Physical Downlink Control Channels (PDCCH) which convey user-specific information required for locating and decoding the data of individual users in the data plane.

The location of a specific (logical) PDCCH within the control region is a known function of a UE identifier (UE ID), also known in the LTE parlance as the radio network temporary identifier (RNTI). Furthermore, the size of a PDCCH depends in a known manner on channel quality, and can attain only four possible values (depending on the so-called aggregation level).

Logical PDCCHs are mapped to physical resources using a common interleaving algorithm, and applying a cell-specific offset. In other words, the location of physical PDCCH is a known deterministic function of UE ID and cell identity (C-ID).

In order to mitigate control channel interference in co-channel SC deployments, it is proposed that a MC is operable to determine, using its MC-ID, a set of UE IDs for which the corresponding PDCCH messages physically occupy a given portion of the control plane resources. This set of UE IDs is then preferably used for MC UEs.

All SCs located within a given MC are operable to use the same block of physical control plane resources, that block being complementary to the resources dedicated to the MC. To do so, each SC determines and uses the set of UE IDs whose PDCCH messages are physically mapped onto the SC dedicated control-plane resources. Given the offset of physical PDCCHs depending upon the cell ID, logical-level matching algorithms can be used.

Partitioning control-plane resources between a MC and its SCs can be carried out distributively without resorting to explicit inter-cell communication. To this end, it is proposed to use a predetermined mapping function **F** known by all MSs/ SCs, and the fact that the cell ID of an umbrella MC, denoted as **MC_cell_ID,** is typically known by hosted SCs.

For more clarity, examples of **F** are discussed separately in the following text. Clearly, an example with a macro and small cell can be generalized to a case of a master cell and slave cell(s). For example, within a cluster of small cells comprising metro and pico cells, or applied recursively across hierarchical networks.

Using the received **MC_cell_ID** as an input of **F**, each SC is operable to determine the logical PDCCH resource(s) that the MC is operable to use for its control transmissions. In the next step, the SC determines a complementary block of control-plane resources, and then finds a set of UE IDs whose physical PDCCH message fall for its own SC identity **SC_cell_ID** into the desired complementary block of control-plane resources. In some embodiments, to compensate for possible differences between consecutive subframes in a frame, those solutions having the best "subframe-average" performance are selected as a final output.

Overall, the subset $SUB_{SC\_cell\_ID}$ of UE IDs usable by an SC named **SC_cell_ID** and deployed in the MC known as **MC_cell_ID,** can be symbolically expressed as a result of a known deterministic mapping $SUB_{SC\_cell\_ID}$ = **F'( MC_cell_ID, SC_cell_ID )** that expression encompasses both the introduced mapping function **F** and the standardized mapping of cell/ UE IDs to physical resources. For completeness, **F'** must be defined for MCs as having a predetermined reserved value for **SC_cell_ID** (e.g., zero as shown in Figure 4).

Apart from decoding the MC broadcast, the MC ID can be determined by SCs (i) from a dedicated entry in the cell configuration recorded during the cell deployment, and/ or (ii) from handover requests since typically MCs are characterized (contrary to SCs) by a zero cell-selection bias.

**Interference mitigation in data channel**

Current implementations of allocation of data channel resources employ a so-called greedy approach according to which active users (typically sorted by priority) are allowed to transmit over segments of data bandwidth in which a perceived signal-to-noise-and-interference ratio at a receiver is the highest.

Given that the uplink transmit powers of mobile macro users (mUE) are typically high the resulting interference is easy to detect at the SCs. It is possible to implement a dynamic method for mitigating the SCs-to-mUE interference on a data channel.

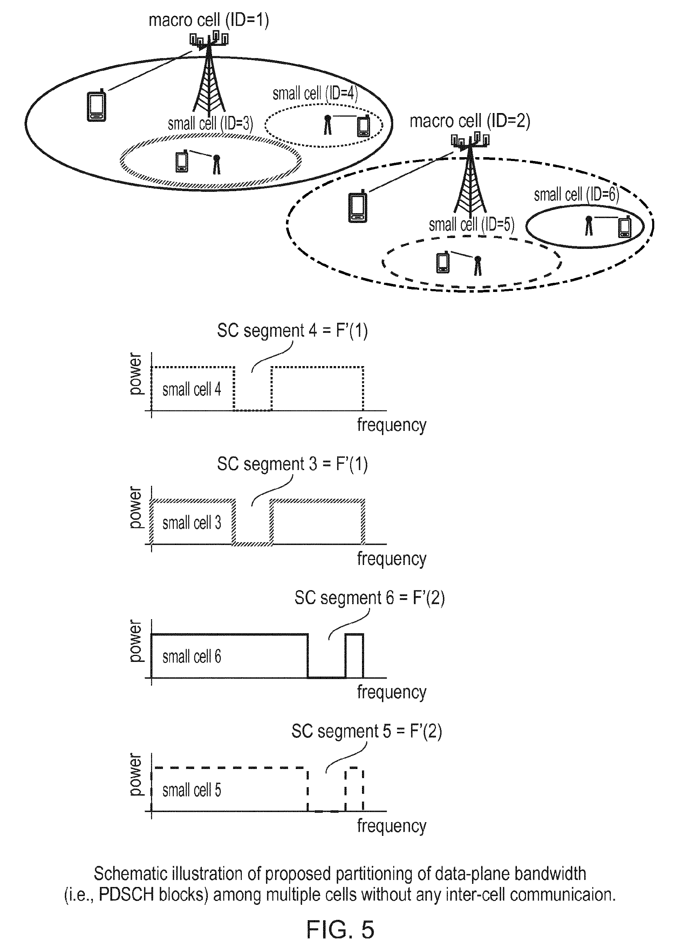

Figure 5 illustrates schematically partitioning of data plane bandwidth according to one embodiment. According to such a method: a SC base station may be operable to measure <u>uplink</u> interference in order to detect fast moving mUEs. If such an mUE is detected, the SC base station may be operable to temporarily avoid any transmission over a (pre)selected portion of the <u>downlink</u> bandwidth (the jammed uplink resources can be temporarily avoided as well).

The uplink (UL) measurements of mUE interference are used only as a trigger for a unilateral reservation of the downlink (DL) resources by the SC(s). Similarly, the exact location of the DL resources reserved by the SCs is irrelevant, since a greedy MC scheduler is biased only towards high-quality channels, disregarding their location.

Given the lack of SC interference in vacated DL resources, the mUE reports these resources as of high quality. The greedy MC scheduler is therefore strongly biased towards allocating the SC-vacated resources to the mUE. Even though short-lived variations in channel quality may occasionally cause temporary allocation of resources outside of the vacated region, numerical simulations show that, in the long run or "on average", the mUE uses the vacated resources.

In a scenario with multiple SCs, theoretically, SCs sufficiently spaced apart could reserve arbitrary bandwidth segments to the benefit of the mUE, because the greedy MC scheduler would be operable to adaptively allocate the locally best bandwidth parts to the mUE. However, in some embodiments it may be helpful if closely located SCs reserve exactly the same downlink resource in the data channel. If all SCs coordinate their choice of the resources to be reserved for mUE communications, the SC interference in the given part of the bandwidth becomes low, and thus a mUE is likely to report it as the best part of the bandwidth for communications with its serving mBS. This coordination among SCs largely improves the reaction time of the MC scheduler, which is of significance in case of VoIP traffic (i.e., voice calls) using semi-persistent scheduling with larger update periods.

In order to coordinate what data channel resources the SCs reserve for the mUE, the SCs could resort to inter-cell negotiations by sending dedicated messages over the X2 interface. However, use of aspects and embodiments described herein may allow for avoidance of such overhead communications by, for example, implementation of a method using the following steps. Each SC may be operable to determine the **MC_cell_ID** of an umbrella MC. Using the **MC_cell_ID** of the umbrella MC as input, each SC may be operable to determine on the basis of a pre-determined mapping function **F**' what part of the (complementary) data bandwidth should be used by the SCs. Effectively, the **resource_location** $_{\text{SC\_cell\_ID}}$ = **F'( MC_cell_ID )**.

## Examples of mapping functions F'

The function **F**' can be implemented in the form of a simple hash tables, injective mappings, mappers onto contiguous sets (minimal perfect hashing), mappers with a given distribution of outputs (uniform, normal, etc) for bounded inputs, and/or iterative/ layered/ randomizing hashers.

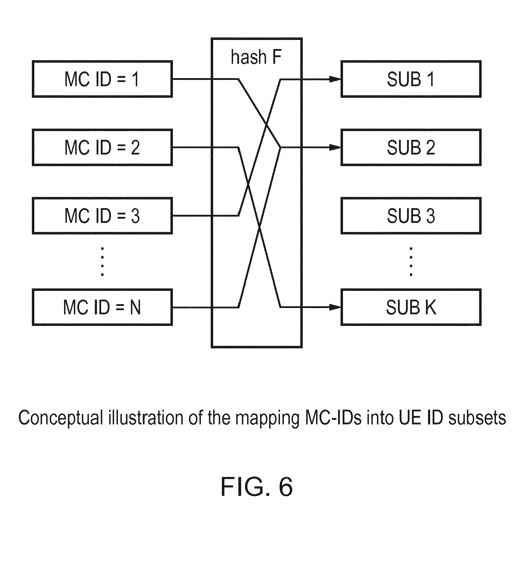

Figure 6 illustrates schematically example mapping functions according to some embodiments. In accordance with some aspects and embodiments, the requirements regarding the nature of **F'** are as follows:

(1) mapping of MC-IDs into a predefined set of random/ (pseudo)-orthogonal resource blocks to minimize inter-MC interference,
(2) simple implementation to reduce hardware/ software costs,
(3) easy reconfigurability to enable further minimization/ maximization of a given performance criterion.

One example satisfying all the above constraints is a function **F'** in the canonical form

$$Y = (A * X + B) \bmod C \qquad (1)$$

which is operable to map cell IDs (input **X**) to the **C** indices (output **Y**) of predetermined resource locations. The **mod** (modulo) operator represents an easy-to-implement mapping randomizer.

A particular choice of **A** and **B** can be used to implement the preferred mapping relationships, minimizing e.g. the probability of inter-MC PDSCH/PDCCH collisions in a given set of MC-IDs.

To ensure a maximum mapping span and randomizing properties required by the above condition (1), the constants **B** and **C** may be relative primes, and **A-1** may be divisible by all prime factors of **C** (Hull-Dobell theorem).

There are various different configurations of **F'** which can have a good performance with respect to the spectral test.

In general, the function **F'** can be dynamically updated, i.e. its definition parameters **A, B,** and **C** can be varied in each cell. For example, given a cluster of (mutually interfering) cells, a selected cell may assume the role of a cluster leader and periodically distribute functions **F'** to other SCs having the role of listeners. In this manner, in some embodiments, the function **F'** can be tailored to the actual load of individual cells, as well as the frequency of inter-cell handovers among particular cells of interest.

The distribution of **F'** can be done on a relatively slow basis, for example after a major change in traffic patterns, or the deployment of a new SC.

Aspects and embodiments described are fully compliant with current 3GPP LTE standards and require no modification to user handsets. The data-plane solution can be implemented solely at the small-cell side, which can demonstrate an applicability to multivendor networks. To improve overall performance of some aspects and embodiments, macro-cell cooperation would be desirable but not necessary in case of applying aspects and embodiments to a control plane solution.

Aspects and embodiments may operate to allow co-existence of co-channel small cells in a macrocell environment without resorting to inter-cell communication and capacity-limiting eICIC techniques such as subframe blanking. Aspects and embodiments can be applied recursively in hierarchical networks, and it is still possible to combine then with application of eICIC techniques.

As described above, by combining aspects and embodiments with other techniques to partition control/data-plane resources and/or antenna orientation offsetting techniques, aspects and embodiments may be used to replace eICIC techniques, for example, subframe blanking.

Aspects and embodiments may operate to adaptively create on-demand interference-free "passage corridors" across data channels for mobile MC UEs that are roaming throughout an area with multiple SCs. Moreover, aspects and embodiments may prevent collision of control messages of cell-edge users. Aspects and embodiments offer a simple and distributive implementation, and can avoid a need for inter-cell communication.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A wireless telecommunications network node method, comprising:

   defining a set of neighbouring co-channel cells comprising a plurality of cells;
   identifying a master cell of said set of neighbouring co-channel cells;
   allocating resource to user equipment being supported by any other one of said set of neighbouring co-channel cells to locate messages for said user equipment within available resource at locations which reduce interference to user equipment being supported by said master cell.

2. A method according to claim 1, wherein resource for use by user equipment supported by said master cell comprises a function of master cell identity.

3. A method according to claim 1, wherein resource for use by user equipment supported by said master cell comprises a function of user equipment identity.

**4.** A method according to claim 2 or claim 3, wherein said function is known by said plurality of cells.

**5.** A method according to any preceding claim, wherein allocating comprises: inferring, based on said master cell identity, a location of messages in said resource likely to be used by said user equipment being supported by said master cell and allocating resource to user equipment being supported by any other one of said set of neighbouring co-channel cells to avoid said inferred location.

**6.** A method according to any preceding claim, wherein said resource comprises bandwidth.

**7.** A method according to any preceding claim, wherein said resource comprises an indication of user equipment identity.

**8.** A method according to any preceding claim, wherein allocating comprises: inferring, based on said master cell identity and an indication of user equipment identifiers used by said user equipment supported by said master cell, a location of messages in said resource likely to be used by said user equipment being supported by said master cell and allocating user equipment identifiers to user equipment being supported by any other one of said set of neighbouring co-channel cells to avoid said inferred location of messages in said resource likely to be used by said user equipment being supported by said master cell.

**9.** A method according to any preceding claim, wherein said step of allocating comprises allocating said resource to user equipment to relocate said messages within said available resource to at least partially unoccupy locations utilised by messages for user equipment supported by said master cell.

**10.** A method according to any preceding claim, wherein said step of allocating comprises allocating said resource to user equipment to relocate said messages within said available resource to fully unoccupy locations utilised by messages for user equipment supported by said master cell.

**11.** A method according to any preceding claim, wherein said step of allocating comprises: allocating said resource to user equipment of all of said plurality of cells other than said master cell to relocate said messages within said available resource at locations which reduce interference to user equipment being supported by said master cell.

**12.** A method according to any preceding claim, wherein said step of allocating comprises allocating master cell resource to said user equipment supported by said master cell to locate said messages within a selected region of said available resource.

**13.** A computer program product operable, when executed on a computer, to perform the method steps of any one of claims 1 to 12.

**14.** A wireless telecommunications network node, comprising:

identifying logic operable to define a set of neighbouring co-channel cells comprising a plurality of cells and identify a master cell of said set of neighbouring co-channel cells;
allocation logic operable to allocate resource to user equipment being supported by any other one of said set of neighbouring co-channel cells to locate messages for said user equipment within available resource at locations which reduce interference to user equipment being supported by said master cell.

**Amended claims in accordance with Rule 137(2) EPC.**

**1.** A wireless telecommunications network node method, comprising:

defining a set of neighbouring co-channel cells comprising a plurality of cells;
identifying a master cell of said set of neighbouring co-channel cells;
allocating resource to user equipment being supported by any other one of said set of neighbouring co-channel cells to locate messages for said user equipment within available resource at locations which reduce interference to user equipment being supported by said master cell wherein allocating comprises:

inferring, based on said master cell identity, a location of messages in said resource likely to be used by said user equipment being supported by said master cell and allocating resource to user equipment being supported by any other one of said set of neighbouring co-channel cells to avoid said inferred location.

**2.** A method according to claim 1, wherein resource for use by user equipment supported by said master cell is allocated as a function of master cell identity.

**3.** A method according to claim 1, wherein resource for use by user equipment supported by said master cell is allocated as a function of user equipment identity.

**4.** A method according to claim 2 or claim 3, wherein said function is known by said plurality of cells.

**5.** A method according to any preceding claim, wherein said resource comprises bandwidth.

**6.** A method according to any preceding claim, wherein allocating comprises:

inferring, based on said master cell identity and an indication of user equipment identifiers used by said user equipment supported by said master cell, a location of messages in said resource likely to be used by said user equipment being supported by said master cell and allocating user equipment identifiers to user equipment being supported by any other one of said set of neighbouring co-channel cells to avoid said inferred location of messages in said resource likely to be used by said user equipment being supported by said master cell.

**7.** A method according to any preceding claim, wherein said step of allocating comprises allocating said resource to user equipment to relocate said messages within said available resource to at least partially unoccupy locations utilised by messages for user equipment supported by said master cell.

**8.** A method according to any preceding claim, wherein said step of allocating comprises allocating said resource to user equipment to relocate said messages within said available resource so as to avoid using locations utilised by messages for user equipment supported by said master cell.

**9.** A method according to any preceding claim, wherein said step of allocating comprises: allocating said resource to user equipment of all of said plurality of cells other than said master cell to relocate said messages within said available resource at locations which reduce interference to user equipment being supported by said master cell.

**10.** A method according to any preceding claim, wherein said step of allocating comprises allocating master cell resource to said user equipment supported by said master cell to locate said messages within a selected region of said available resource.

**11.** A computer program product operable, when executed on a computer, to perform the method steps of any one of claims 1 to 10.

**12.** A wireless telecommunications network node, comprising:

identifying logic operable to define a set of neighbouring co-channel cells comprising a plurality of cells and identify a master cell of said set of neighbouring co-channel cells;
allocation logic operable to allocate resource to user equipment being supported by any other one of said set of neighbouring co-channel cells to locate messages for said user equipment within available resource at locations which reduce interference to user equipment being supported by said master cell wherein said allocation logic is operable to infer based on said master cell identity, a location of messages in said resource likely to be used by said user equipment being supported by said master cell and allocate resource to user equipment being supported by any other one of said set of neighbouring co-channel cells to avoid said inferred location.

FIG. 1

Schematic illustration of the small-cell concept

FIG. 2

MC-MC orthogonality of dedicated resources

| macro cell 1 | | macro cell 2 |
| MC-ID → F → dedicated MC resources | | MC-ID → F → dedicated MC resources |

MC-ID broadcast

MC-ID broadcast

MC-ID → F' → dedicated SC resources
small cell 1
small cell 2
small cell N

MC-ID → F' → dedicated SC resources
small cell 1
small cell 2
small cell N

SC-SC identity of dedicated resources
within same MC ("resource corridor")

SC-SC identity of dedicated resources
within same MC ("resource corridor")

Basic invention idea

FIG. 3

macro cell (ID=1)

small cell (ID=4)

small cell (ID=3)

$SUB_{MC1} = F'(1,0)$
$SUB_{SC2} = F'(1,3)$
$SUB_{SC3} = F'(1,4)$

Schematic illustration of proposed partitioning of UE IDs (i.e., PDCCH locations)
among multiple cells without background inter-cell communicaion.

FIG. 4

Schematic illustration of proposed partitioning of data-plane bandwidth
(i.e., PDSCH blocks) among multiple cells without any inter-cell communicaion.

FIG. 5

Conceptual illustration of the mapping MC-IDs into UE ID subsets

FIG. 6

Europäisches
Patentamt

European
Patent Office

Office européen
des brevets

# EUROPEAN SEARCH REPORT

Application Number

EP 13 30 5842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 466 940 A1 (MIMOON GMBH [DE]) 20 June 2012 (2012-06-20) * paragraphs [0001] - [0026], [0030] - [0071]; figures 1-4 * | 1-14 | INV. H04W16/16 H04W72/08 |
| X | "3rd Generation Partnership Project; Technical Specification Group Radio Access Network; Evolved Universal Terrestrial Radio Access (E-UTRA); TDD Home eNode B (HeNB) Radio Frequency (RF) requirements analysis (Release 11)", 3GPP STANDARD; 3GPP TR 36.922, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V11.0.0, 23 September 2012 (2012-09-23), pages 1-74, XP050649923, [retrieved on 2012-09-23] * section 7, in particular section 7.4 * | 1-14 | |
| X | US 2011/237243 A1 (GUVENC ISMAIL [US] ET AL) 29 September 2011 (2011-09-29) * paragraphs [0002] - [0012], [0026] - [0052]; figures 1-13 * | 1-14 | TECHNICAL FIELDS SEARCHED (IPC) H04W H04L H04J |
| X | EP 2 190 236 A1 (ALCATEL LUCENT [FR]) 26 May 2010 (2010-05-26) | 1,6,9-14 | |
| A | * paragraphs [0002] - [0014], [0016] - [0039]; figures 1-6 * | 2-5,7,8 | |

The present search report has been drawn up for all claims

| Place of search | Date of completion of the search | Examiner |
|---|---|---|
| Berlin | 23 January 2014 | Jaster, Nicole |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 30 5842

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2014

| Patent document cited in search report | | Publication date | Patent family member(s) | | Publication date |
|---|---|---|---|---|---|
| EP 2466940 | A1 | 20-06-2012 | NONE | | |
| US 2011237243 | A1 | 29-09-2011 | JP | 2013524637 A | 17-06-2013 |
| | | | US | 2011237243 A1 | 29-09-2011 |
| | | | WO | 2011123466 A1 | 06-10-2011 |
| EP 2190236 | A1 | 26-05-2010 | CN | 101742520 A | 16-06-2010 |
| | | | EP | 2190236 A1 | 26-05-2010 |
| | | | US | 2010130222 A1 | 27-05-2010 |
| | | | WO | 2010057563 A1 | 27-05-2010 |

EPO FORM P0459

For more details about this annex : see Official Journal of the European Patent Office, No. 12/82